# EUROPEAN PATENT APPLICATION

(11) **EP 4 779 373 A1**
(43) Date of publication of application: **22.07.2026**
(21) Application number: 24865303.2
(22) Date of filing: 02.09.2024
(51) Int. Cl.: G02B 6/36

(54) **OPTICAL CONNECTOR**

(30) Priority: 12.09.2023 JP 2023147479
(71) Applicant: Sumitomo Electric Optifrontier Co., Ltd., Yokohama-shi, Kanagawa 244-8589 (JP)
(72) Inventor: FUJIHARA, Yuto, Yokohama-shi, Kanagawa 244-8589 (JP); SHIBATA, Masahiro, Yokohama-shi, Kanagawa 244-8589 (JP)
(74) Representative: TBK
(86) International application number: PCT/JP2024/031478
(87) International publication number: WO 2025/057801

(57) **Abstract**

An optical connector (10) is provided with: a ferrule (30) that holds the tip of an optical fiber; a boot (60); a boot support part (42); and an ejector (50). The boot (60) has a hole (68) through which the optical fiber cable (20) is passed, and a grip part (61) that can be gripped by an operator. The boot support part (42) has a fitting part (43) that rotatably fits with an end close to the ferrule (30) of the boot (60). The ejector (50) releases the engagement between the optical connector (10) and an adapter (100) by moving relative to the ferrule (30) in a direction away from the adapter (100). The ejector (50) has a first engagement part (52). The boot (60) has a passage part (62) and a second engagement part (63). The passage part (62) allows for the passage of the first engagement part (52) when the boot (60) moves in a first direction in order to fit with the fitting part (43). The second engagement part (63) is disposed alongside the passage part (62) in the circumferential direction of the boot (60) and engages with the first engagement part (52).

## Description

### Technical Field

The present disclosure relates to an optical connector. Priority is claimed on Japanese Patent Application No. 2023-147479, filed on September 12, 2023, the entire content of which is incorporated herein by reference.

### Background Art

Patent Literature 1 discloses an MPO optical connector. The optical connector includes a ferrule; a housing that accommodates the ferrule; and a boot attached to the housing and extending rearward.

### Citation List

### Patent Literature

Patent Literature 1: Japanese Unexamined Patent Publication No. 2012-058320
Patent Literature 2: United States Patent No. 11474308
Patent Literature 3: United States Patent Application, Publication No. 2021/0149124
Patent Literature 4: United States Patent Application, Publication No. 2021/0405302
Patent Literature 5: United States Patent Application, Publication No. 2022/0196927

### Summary of Invention

### Technical Problem

The optical connector includes a latch mechanism that engages with an adapter when the optical connector is inserted into the adapter. A certain type of optical connector further includes an ejector for releasing the engaged state of the latch mechanism when the optical connector is removed from the adapter. The ejector is configured to be movable relative to a main body portion of the optical connector in a pulling direction. The engaged state of the latch mechanism is released by the movement of the ejector. In addition, the optical connector includes a boot at a rear end portion thereof. The boot is a flexible resin body that covers an optical fiber cable extending from the optical connector. The boot protects the optical fiber cable from sharp bending.

When inserting the optical connector having the above-described configuration into the adapter, an operator grips a portion other than the ejector, for example, the boot, and pushes the optical connector into the adapter. This allows the ejector to be movable relative to the main body portion of the optical connector in a direction opposite to an insertion direction, so that the latch mechanism operates smoothly. On the other hand, when pulling out the optical connector having the above-described configuration from the adapter, the operator grips the ejector, and pulls out the optical connector from the adapter. This allows the ejector to move relative to the main body portion of the optical connector in the pulling direction, thereby releasing the engaged state of the latch mechanism. In this way, in the optical connector, the operator needs to change the gripping position when inserting the optical connector into the adapter and when pulling out the optical connector from the adapter. Therefore, the work of inserting and pulling out the optical connector into and from the adapter becomes complicated.

An object of the present disclosure is to provide an optical connector that enables an operator to insert the optical connector into an adapter and pull out the optical connector from the adapter without changing the gripping position.

### Solution to Problem

An optical connector according to one aspect of the present disclosure is an optical connector attached to an optical fiber cable containing an optical fiber, and inserted into an adapter along a first direction. The optical connector includes a ferrule; a boot; a boot support portion; and an ejector. The ferrule is disposed at a first end of the optical connector in the first direction, and holds a distal end portion of the optical fiber. The boot is disposed at a second end of the optical connector in the first direction, and includes a hole through which the optical fiber cable is inserted, and a grip portion that can be gripped by an operator. The boot support portion is disposed between the ferrule and the boot. The boot support portion includes a fitting portion that rotatably fits onto an end portion of the boot that is close to the ferrule in the first direction, and supports the boot. The ejector is disposed between the ferrule and the boot, and moves relative to the ferrule in a direction away from the adapter to release an engagement between the optical connector and the adapter. The ejector further includes one or a plurality of first engaging portions. The boot further includes one or a plurality of passage portions and one or a plurality of second engaging portions. The one or the plurality of passage portions are provided closer to the ferrule than the grip portion, and allow the one or the plurality of first engaging portions to pass through the passage portions when the boot moves in the first direction to fit onto the fitting portion of the boot support portion. The one or the plurality of second engaging portions are provided in alignment with the one or the plurality of passage portions in a circumferential direction of the boot, and engage with the one or the plurality of respective first engaging portions.

### Advantageous Effects of Invention

According to the present disclosure, it is possible to provide the optical connector that enables the operator to insert the optical connector into the adapter and pull out the optical connector from the adapter without changing the gripping position.

### Brief Description of Drawings

[FIG. 1] FIG. 1 is a perspective view illustrating the appearance of an optical connector according to one embodiment of the present disclosure.
[FIG. 2] FIG. 2 is a perspective view illustrating the appearance of the optical connector according to one embodiment.
[FIG. 3] FIG. 3 is a perspective view illustrating the appearance of the optical connector according to one embodiment.
[FIG. 4] FIG. 4 is a perspective view illustrating the appearance of the optical connector according to one embodiment.
[FIG. 5] FIG. 5 is a perspective view illustrating the appearance of the optical connector according to one embodiment.
[FIG. 6] FIG. 6 is a perspective view illustrating a configuration of an optical connector according to one modification example.
[FIG. 7] FIG. 7 is a perspective view illustrating the configuration of the optical connector according to one modification example.
[FIG. 8] FIG. 8 is a perspective view illustrating the configuration of the optical connector according to one modification example.

### Description of Embodiments

### [Description of embodiment of present disclosure]

First, the contents of an embodiment of the present disclosure will be listed and described. [1] An optical connector according to one aspect of the present disclosure is an optical connector attached to an optical fiber cable containing an optical fiber, and inserted into an adapter along a first direction, the optical connector including a ferrule; a boot; a boot support portion; and an ejector. The ferrule is disposed at a first end of the optical connector in the first direction, and holds a distal end portion of the optical fiber. The boot is disposed at a second end of the optical connector in the first direction, and includes a hole through which the optical fiber cable is inserted, and a grip portion that can be gripped by an operator. The boot support portion is disposed between the ferrule and the boot. The boot support portion includes a fitting portion that rotatably fits onto an end portion of the boot that is close to the ferrule in the first direction, and supports the boot. The ejector is disposed between the ferrule and the boot, and moves relative to the ferrule in a direction away from the adapter to release an engagement between the optical connector and the adapter. The ejector further includes one or a plurality of first engaging portions. The boot further includes one or a plurality of passage portions and one or a plurality of second engaging portions. The one or the plurality of passage portions are provided closer to the ferrule than the grip portion, and allow the one or the plurality of first engaging portions to pass through the passage portions when the boot moves in the first direction to fit onto the fitting portion of the boot support portion. The one or the plurality of second engaging portions are provided in alignment with the one or the plurality of passage portions in a circumferential direction of the boot, and engage with the one or the plurality of respective first engaging portions.

When the optical connector is assembled, the passage portions of the boot allow the first engaging portions of the ejector to pass therethrough. Accordingly, the boot can fit onto the fitting portion of the boot support portion without interfering with the first engaging portions. Then, after the boot is fitted onto the fitting portion, the angle of the boot in a rotation direction is adjusted by the operator, so that the second engaging portions of the boot are aligned with the first engaging portions of the ejector in the first direction. Accordingly, when the operator grips the grip portion of the boot and pulls out the optical connector from the adapter, the second engaging portions of the boot engage with the first engaging portions of the ejector. Therefore, a pulling force applied to the boot is transmitted to the ejector, and the ejector retracts, thereby releasing the engagement between the optical connector and the adapter and pulling out the optical connector from the adapter. When the optical connector is inserted into the adapter, the grip portion of the boot is gripped by the operator, and an insertion force applied to the boot is transmitted to the entirety of the optical connector via the boot support portion. In this way, according to the optical connector of [1] above, the operator can perform both insertion of the optical connector into the adapter and pulling out of the optical connector from the adapter while gripping the grip portion of the boot. Therefore, the operator can insert the optical connector into the adapter and pull out the optical connector from the adapter without changing the gripping position.

[2] In the optical connector according to [1] above, the ejector may further include one or a plurality of protruding portions that protrude from an end of the ejector along a direction opposite to the first direction, the end being close to the boot in the first direction, and the one or the plurality of first engaging portions may be provided at distal ends of the one or plurality of respective protruding portions. In that case, the passage portions and the second engaging portions of the boot are easily visible through gaps adjacent to the protruding portions. Therefore, it becomes easier to align the positions of the second engaging portions with the first engaging portions.

[3] In the optical connector according to [1] or [2] above, the ejector may have a rectangular tubular shape when viewed from the first direction, and the plurality of first engaging portions may be provided at at least four corners of the ejector. Accordingly, the force that pulls out the optical connector can be transmitted from the boot to the ejector in a well-balanced manner.

[4] In the optical connector according to any one of [1] to [3] above, the one or the plurality of second engaging portions may include respective projections on an outer peripheral surface of the boot, the projections protruding in a direction intersecting the first direction. In that case, the second engaging portions can have a simple structure. Therefore, the boot including the second engaging portions can be easily manufactured.

[5] In the optical connector according to [4] above, recesses into which the one or the plurality of respective second engaging portions fit may be formed on rear end surfaces of the projections. In that case, when the optical connector is pulled out from the adapter, the relative positional relationship between the first engaging portions and the second engaging portions can be stabilized. Therefore, the first engaging portions can be prevented from accidentally moving to the positions where the first engaging portions overlap the passage portions, that is, the boot can be prevented from disengaging from the fitting portion.

[6] In the optical connector according to any one of [1] to [5] above, the plurality of second engaging portions may be alternately aligned with the plurality of passage portions in the circumferential direction. In that case, each second engaging portion is always adjacent to one of the passage portions in a certain rotation direction. Therefore, when the angle of the boot in the rotation direction is adjusted by the operator after the boot is fitted onto the fitting portion, the workability can be improved by reducing the adjustment angle.

[7] In the optical connector according to any one of [1] to [6] above, the plurality of passage portions may include respective recesses formed between the plurality of second engaging portions and extending along the first direction. In that case, since the passage portions can have a simple structure, the boot including the passage portions can be easily manufactured.

### [Details of embodiment of present disclosure]

A specific example of an optical connector of the present disclosure will be described below with reference to the drawings. The present invention is not limited to this example, and is intended to include all modifications defined by the claims and within the concept and scope of the equivalents of the claims. In the following description, the same elements in the description of the drawings are denoted by the same reference signs, and duplicate descriptions will be omitted. In the following description, "forward" refers to a direction toward an adapter or another optical connector to be connected, and "rearward" refers to the opposite direction.

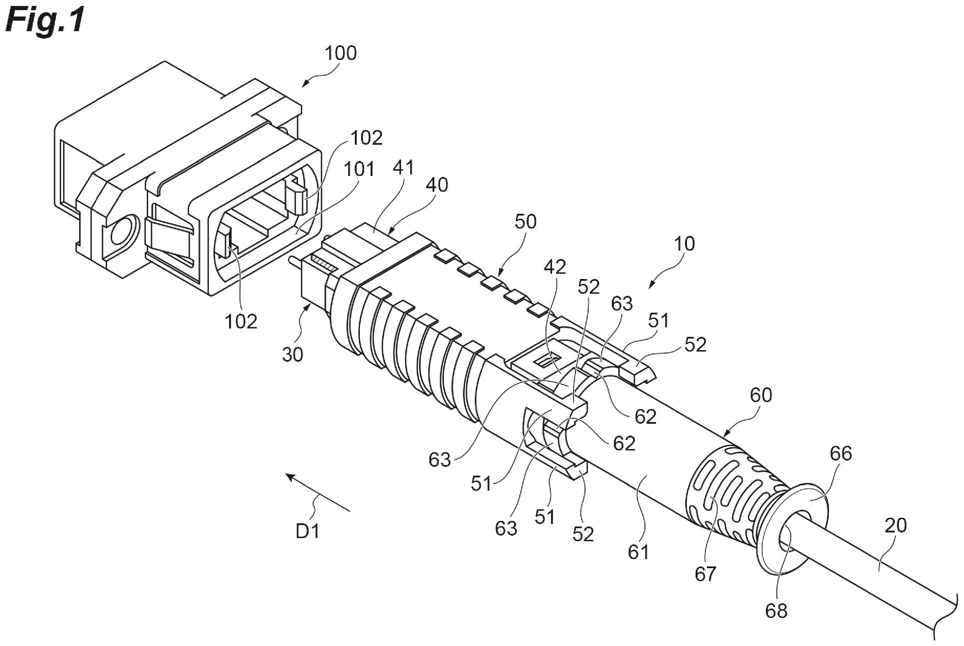

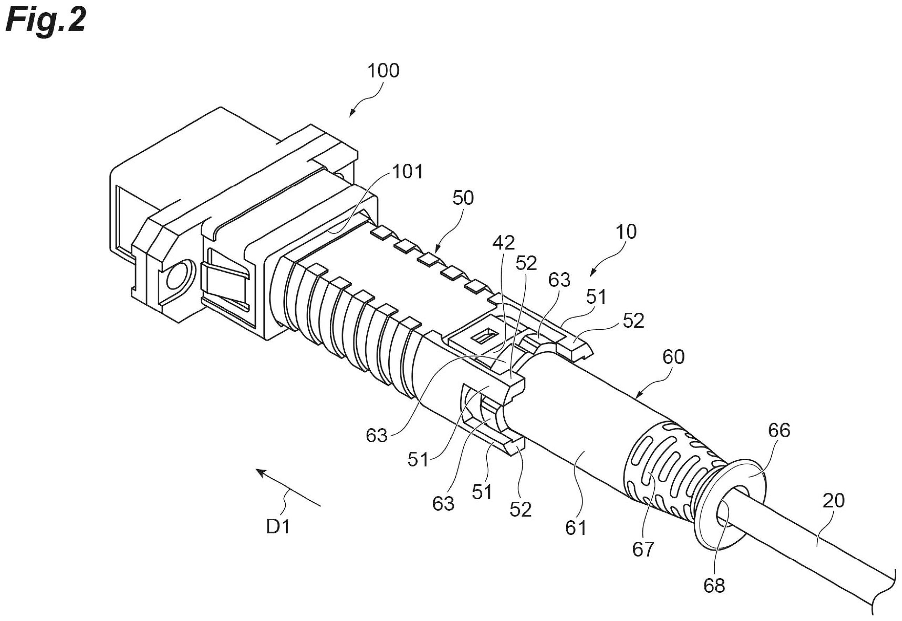

FIGS. 1 and 2 are perspective views illustrating the appearance of an optical connector 10 according to one embodiment of the present disclosure. FIG. 1 illustrates the state before insertion into an adapter 100, and FIG. 2 illustrates the state after insertion into the adapter 100. The optical connector 10 is, for example, a multi-fiber MPO connector. The optical connector 10 is attached to an optical fiber cable 20 containing optical fibers, and is inserted into an opening 101 of the adapter 100 along a direction D1 (first direction), thereby being connected to another optical connector (not illustrated) to be connected. As illustrated in FIG. 1, the optical connector 10 of the present embodiment includes a ferrule 30, a housing 40, an ejector 50, and a boot 60.

The ferrule 30 is illustrated with a part of the housing 40 cut away in FIG. 1. The ferrule 30 is disposed at a first end of the optical connector 10 that is close to the adapter 100 in the direction D1, that is, at a front end of the optical connector 10. The ferrule 30 holds the distal end portions of the optical fibers extending from the optical fiber cable 20. The ferrule 30 comes into contact with a ferrule of the other optical connector to be connected, thereby optically coupling the optical fibers to optical fibers held by a ferrule of the other optical connector. The ferrule 30 is made of, for example, resin. The ferrule 30 of the present embodiment is, for example, a multi-fiber MT ferrule.

The housing 40 accommodates the ferrule 30 and portions of the optical fibers that extend from the optical fiber cable 20. Meanwhile, an end surface of the ferrule 30 that comes into contact with the ferrule of the other optical connector is exposed from the housing 40. The housing 40 has, for example, a rectangular tubular shape extending along the direction D1. The housing 40 is made of, for example, resin. As illustrated in FIG. 1, the adapter 100 includes a pair of hook-shaped portions (latch levers) 102 in the opening 101. The housing 40 includes a pair of recesses (not illustrated) that engage with the pair of respective hook-shaped portions 102. When the optical connector 10 is inserted into the opening 101 of the adapter 100, the pair of recesses of the housing 40 engage with the pair of hook-shaped portions (latch levers) 102, thereby fixing the optical connector 10 to the adapter 100.

The housing 40 includes a ferrule accommodating portion 41 and a boot support portion 42. The ferrule accommodating portion 41 is provided at a front end of the housing 40 in the direction D1, and accommodates the ferrule 30. An outer surface of the ferrule accommodating portion 41 functions as an insertion guide when the optical connector 10 is inserted into the adapter 100. The ferrule accommodating portion 41 supports the ferrule 30 so as to be movable along the direction D1 inside the ferrule accommodating portion 41. The ferrule 30 is biased forward by a coil spring (not illustrated) accommodated in the housing 40.

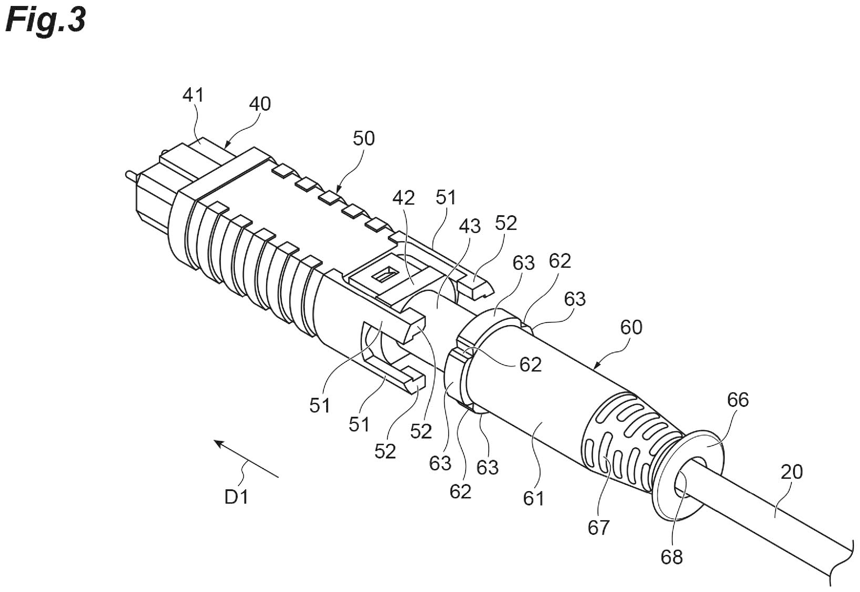

The boot support portion 42 is provided at a rear end of the housing 40 in the direction D1, and supports the boot 60. That is, the boot support portion 42 is disposed between the ferrule 30 and the boot 60. FIG. 3 is a perspective view illustrating the state before the boot 60 is assembled to the housing 40. As illustrated in FIG. 3, the boot support portion 42 includes a fitting portion 43 that fits onto the boot 60. The fitting portion 43 has, for example, a cylindrical shape, and a central axis of the cylinder is aligned with the direction D1. The central axis of the fitting portion 43 coincides with a central axis of the optical connector 10. The fitting portion 43 protrudes rearward from a proximal end portion of the boot support portion 42. For example, an outer surface of the fitting portion 43 fits onto an inner surface of the boot 60, thereby supporting the boot 60. The optical fiber cable 20 is inserted through the interior of the fitting portion 43.

Referring again to FIGS. 1 and 2, the ejector 50 is disposed between the ferrule 30 and the boot 60. In the illustrated example, the ejector 50 has, for example, a rectangular tubular shape extending along the direction D1, and is disposed so as to cover the outer surface of the housing 40. The ejector 50 is made of, for example, an engineering plastic resin such as polycarbonate (PC), polyoxymethylene (POM), polybutylene terephthalate (PBT), polyphenylene sulfide (PPS), or polyetherimide (PEI). Glass fillers may be mixed in the engineering plastic resin. The ejector 50 is movable relative to the ferrule 30 and the housing 40 including the boot support portion 42 in a direction away from the adapter 100, that is, rearward, in other words, in a direction opposite to a direction toward which the arrow of the direction D1 is directed. When the ejector 50 moves rearward relative to the ferrule 30 and the housing 40, first, the ejector 50 covering the pair of hook-shaped portions (latch levers) 102 of the adapter 100 disengages from the pair of hook-shaped portions 102. Subsequently, when the ejector 50 moves to a rearward movement limit relative to the housing 40, the housing 40 moves rearward together with the ejector 50. As a result, the pair of hook-shaped portions (latch levers) 102 of the adapter 100 disengage from the pair of recesses of the housing 40, and the engagement between the optical connector 10 and the adapter 100 is released.

The ejector 50 further includes one or a plurality (four in the illustrated example) of protruding portions 51. The protruding portions 51 each protrude rearward from an end of the ejector 50 that is close to the boot 60 in the direction D1, that is, from a rear end of the ejector 50 along the direction opposite to the direction D1. In one example, the protruding portions 51 each have a rod shape extending along the direction opposite to the direction D1. The four protruding portions 51 in the illustrated example are provided at the four respective corners of the ejector 50 having a rectangular tubular shape when viewed from the direction D1. Therefore, the four protruding portions 51 are aligned along an outer peripheral surface of the fitting portion 43 of the boot support portion 42, and surround the fitting portion 43.

The ejector 50 further includes one or a plurality (four in the illustrated example) of first engaging portions 52. The first engaging portions 52 each engage with the boot 60 to be described later. The first engaging portions 52 are provided at the distal ends of the respective protruding portions 51, that is, at the rear end of the ejector 50, and protrude toward the interior of the optical connector 10 when viewed from the direction D1. In other words, the first engaging portions 52, together with the protruding portions 51, form a hook shape. The first engaging portions 52 are provided at the four respective corners of the ejector 50 having a rectangular tubular shape when viewed from the direction D1. Therefore, the four first engaging portions 52 are aligned along the outer peripheral surface of the fitting portion 43 of the boot support portion 42, and surround the fitting portion 43.

The boot 60 is disposed at a second end of the optical connector 10 that is farthest from the adapter 100 in the direction D1, that is, at the rear end of the optical connector 10. The boot 60 is made of, for example, a resin material such as styrene, olefin, polyester, or polyurethane. The boot 60 is, for example, a tubular body having a cylindrical shape or a conical outer surface, and has a hole 68 for inserting the optical fiber cable 20 on and around a central axis thereof along a longitudinal direction (the direction D1 in the figures). In order to ensure the overall flexibility of the boot 60, slits 67 may be formed in a part of the boot 60. The optical fiber cable 20 is introduced into the housing 40 from the rear end of the optical connector 10 through the hole 68 in the central portion of the boot 60 and the interior of the fitting portion 43 having a cylindrical shape.

The boot 60 further includes a grip portion 61 that can be gripped by an operator. The grip portion 61 is provided at substantially the center of the boot 60 in the direction D1. The grip portion 61 includes a cylindrical surface extending along the direction D1 and gripped by the operator. Furthermore, the boot 60 includes, at a rear end portion of the boot 60, a protrusion 66 having a flange shape for hooking fingers when being pulled out.

The hole 68 of the boot 60 fits onto the fitting portion 43 of the boot support portion 42 at a front end of the hole 68, that is, at the first end close to the ferrule 30 in the direction D1. The boot 60 is rotatable about its own central axis relative to the fitting portion 43 in a state in which the boot 60 is fitted onto the fitting portion 43. In addition, the boot 60 is movable along the direction D1 and the opposite direction relative to the fitting portion 43 in a state in which the boot 60 is fitted onto the fitting portion 43. That is, an inner surface of the hole 68 of the boot 60 can slide against the surface of the fitting portion 43.

The boot 60 further includes one or a plurality (four in the illustrated example) of passage portions 62 and one or a plurality (four in the illustrated example) of second engaging portions 63. The passage portions 62 are each provided in the boot 60 so as to be closer to the ferrule 30 than the grip portion 61. In the illustrated example, the passage portions 62 are each provided at a front end portion of the boot 60. The passage portions 62 allow the respective first engaging portions 52 to pass therethrough when the boot 60 moves along the direction D1 to fit onto the fitting portion 43 during assembly of the optical connector 10. Therefore, the number of the passage portions 62 is the same as the number of the first engaging portions 52, or is larger than the number of the first engaging portions 52.

The one or the plurality of second engaging portions 63 are provided in alignment with the one or the plurality of passage portions 62 in a circumferential direction of the boot 60. In one example, the number of the second engaging portions 63 is the same as the number of the passage portions 62. The number of the second engaging portions 63 is the same as the number of the first engaging portions 52, or is larger than the number of the first engaging portions 52. The second engaging portions 63 engage with the respective first engaging portions 52. The second engaging portions 63 each include a projection on an outer peripheral surface of the boot 60, the projection protruding in a direction intersecting the direction D1. The surface of the projection is, for example, a partial cylindrical surface. When the plurality of second engaging portions 63 are provided, the plurality of second engaging portions 63 are provided in alignment and alternately with the plurality of passage portions 62 in the circumferential direction. In that case, the plurality of passage portions 62 include respective recesses formed between the plurality of second engaging portions 63 and extending along the direction D1. As in the illustrated example, the recesses may be grooves, each of which has a V-shaped cross-section. The cross-sectional shape of the recesses is determined according to the cross-sectional shape of the first engaging portions 52 such that the first engaging portions 52 can pass through the recesses.

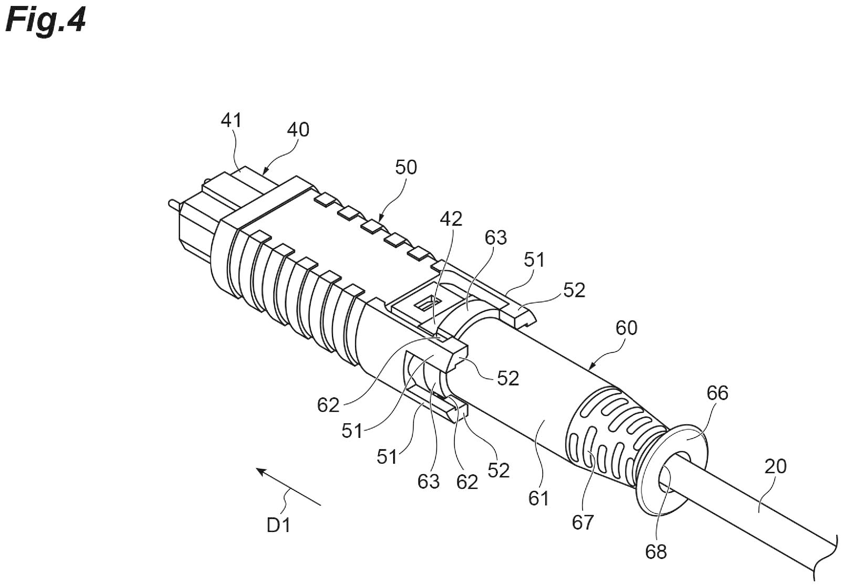

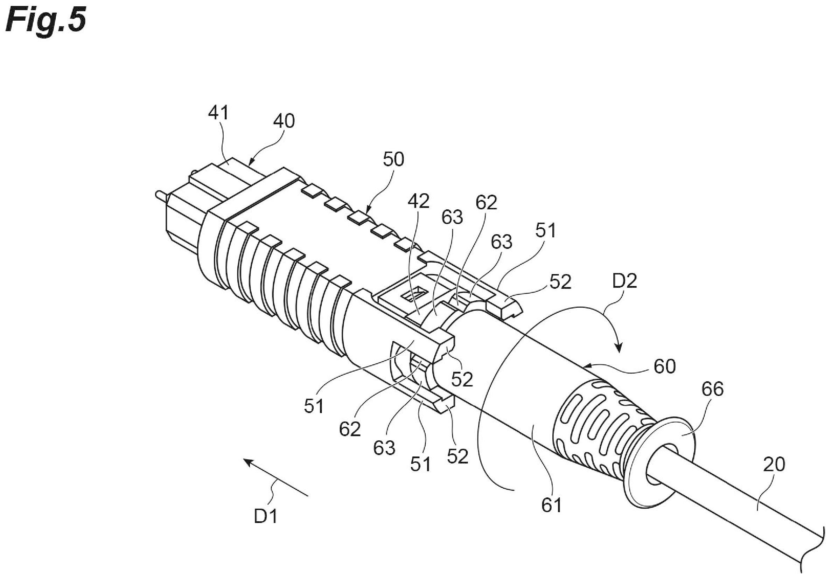

Effects obtained by the optical connector 10 of the present embodiment having the above configuration are as follows. When the optical connector 10 is assembled, the fitting portion 43 is inserted into the hole 68 of the boot 60, thereby fitting the boot 60 onto the fitting portion 43. At this time, as illustrated in FIG. 4, the passage portions 62 of the boot 60 allow the first engaging portions 52 of the ejector 50 to pass therethrough. Accordingly, the boot 60 can fit onto the fitting portion 43 of the boot support portion 42 without interfering with the first engaging portions 52. Then, after the boot 60 is fitted onto the fitting portion 43, as illustrated in FIG. 5, the angle of the boot 60 in a rotation direction is adjusted by the operator (see arrow D2), so that the second engaging portions 63 of the boot 60 are aligned with the first engaging portions 52 of the ejector 50 in the direction D1.

Accordingly, when the operator grips the grip portion 61 of the boot 60 and pulls out the optical connector 10 from the adapter 100, the second engaging portions 63 of the boot 60 engage with the first engaging portions 52 of the ejector 50. Therefore, a pulling force applied to the boot 60 is transmitted to the ejector 50, and the ejector 50 retracts together with the boot 60, thereby releasing the engagement between the optical connector 10 and the adapter 100 and pulling out the optical connector 10 from the adapter 100. The fitting portion 43 has a length in a front-rear direction, that is, in the direction along the direction D1, such that the fitting portion 43 and the boot 60 do not disengage from each other even in a state in which the ejector 50 and the boot 60 have moved to the rearward movement limit relative to the housing 40.

When the optical connector 10 is inserted into the adapter 100, the grip portion 61 of the boot 60 is gripped by the operator, and an insertion force applied to the boot 60 is transmitted to the entirety of the optical connector 10 via the boot support portion 42. In this way, according to the optical connector 10 of the present embodiment, the operator can perform both insertion of the optical connector 10 into the adapter 100 and pulling out of the optical connector 10 from the adapter 100 while gripping the grip portion 61 of the boot 60. Therefore, the operator can insert the optical connector 10 into the adapter 100 and pull out the optical connector 10 from the adapter 100 without changing the gripping position.

As in the present embodiment, the ejector 50 may include the one or the plurality of protruding portions 51 that protrude from the end of the ejector 50 along the direction opposite to the direction D1, the end being close to the boot 60 in the direction D1. Further, the first engaging portions 52 may be provided at the distal ends of the respective protruding portions 51. In that case, the passage portions 62 and the second engaging portions 63 of the boot 60 are easily visible through gaps adjacent to the protruding portions 51, that is, through gaps between the protruding portions 51 adjacent to each other. Therefore, it becomes easier for the operator to align the positions of the second engaging portions 63 with the first engaging portions 52.

As in the present embodiment, the ejector 50 may have a rectangular tubular shape when viewed from the direction D1, and the plurality of first engaging portions 52 may be provided at at least the four respective corners of the ejector 50. Accordingly, the force that pulls out the optical connector 10 can be transmitted from the boot 60 to the ejector 50 in a well-balanced manner.

As in the present embodiment, the second engaging portions 63 each may include a projection on the outer peripheral surface of the boot 60, the projection protruding in the direction intersecting the direction D1. In that case, since the second engaging portions 63 can have a simple structure, the boot 60 including the second engaging portions 63 can be easily manufactured.

As in the present embodiment, the plurality of second engaging portions 63 may be alternately aligned with the plurality of passage portions 62 in the circumferential direction. In that case, each second engaging portion 63 is always adjacent to one of the passage portions 62 in a certain rotation direction. Therefore, when the angle of the boot 60 in the rotation direction is adjusted by the operator after the boot 60 is fitted onto the fitting portion 43, the workability can be improved by reducing the adjustment angle.

As in the present embodiment, the passage portions 62 each may include a recess formed between the second engaging portions 63 adjacent to each other and extending along the direction D1. In that case, since the passage portions 62 can have a simple structure, the boot 60 including the passage portions 62 can be easily manufactured.

### [Modification example]

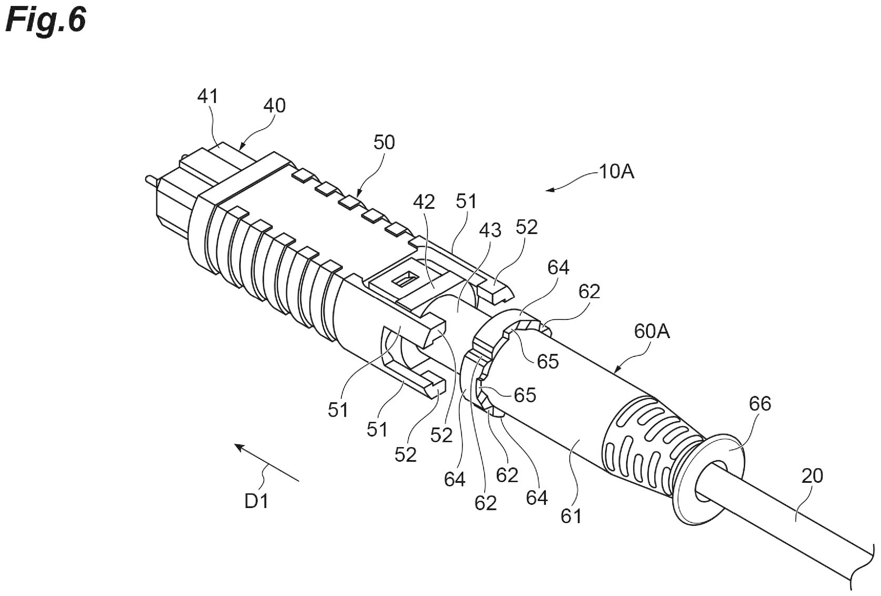

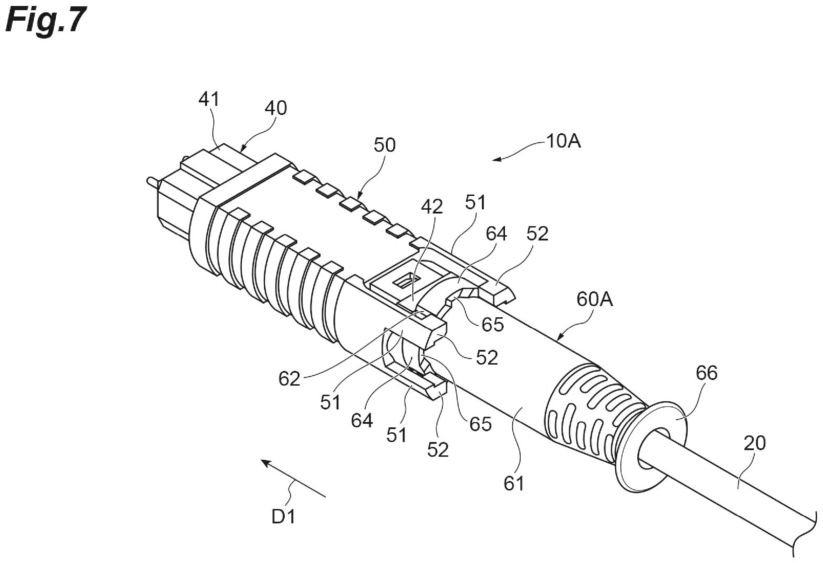

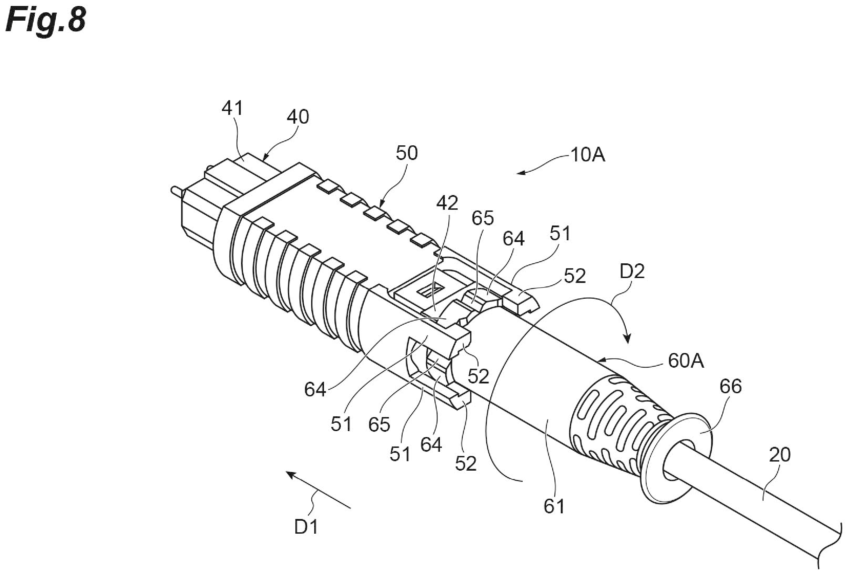

FIGS. 6, 7, and 8 are perspective views illustrating a configuration of an optical connector 10A according to one modification example of the above-described embodiment. FIG. 6 illustrates the state of a boot 60A before fitting onto the fitting portion 43. FIG. 7 illustrates the state of the boot 60A immediately after being fitted onto the fitting portion 43. FIG. 8 illustrates a state after the angle of the boot 60A in a rotation direction is adjusted by the operator after the state illustrated in FIG. 7.

The optical connector 10A of the present modification example includes the boot 60A instead of the boot 60 of the above-described embodiment. The boot 60A has the same configuration as that of the boot 60 except for the points to be described below. The boot 60A includes one or a plurality of second engaging portions 64 instead of the one or the plurality of second engaging portions 63 of the above-described embodiment. The second engaging portions 64 include recesses 65 on the rear end surfaces thereof. The recesses 65 are recessed forward in the direction D1 with respect to the second engaging portions 64. After the angle of the boot 60A in a rotation direction is adjusted by the operator, as illustrated in FIG. 8, the recesses 65 are aligned with the first engaging portions 52 in the direction D1. Then, when the operator grips the grip portion 61 of the boot 60 and pulls out the optical connector 10 from the adapter 100, the first engaging portions 52 of the ejector 50 fit into the recesses 65 of the boot 60. Accordingly, when the optical connector 10 is pulled out from the adapter 100, the relative positional relationship between the first engaging portions 52 and the second engaging portions 64 can be stabilized. Therefore, the first engaging portions 52 can be prevented from accidentally moving to the positions where the first engaging portions 52 overlap the passage portions 62, that is, the boot 60A can be prevented from disengaging from the fitting portion 43.

The optical connector according to the present disclosure is not limited to the embodiment described above, and can be modified in other various forms. For example, in the embodiment described above, both the first engaging portion and the second engaging portion include projections, and the projections engage with each other. The first engaging portion and the second engaging portion are not limited thereto, and may have other various shapes that allow the first engaging portion and the second engaging portion to engage with each other.

### Reference Signs List

10, 10A: optical connector, 20: optical fiber cable, 30: ferrule, 40: housing, 41: ferrule accommodating portion, 42: boot support portion, 43: fitting portion, 50: ejector, 51: protruding portion, 52: first engaging portion, 60, 60A: boot, 61: grip portion, 62: passage portion, 63, 64: second engaging portion, 65: recess, 66: protrusion, 67: slit, 68: hole, 100: adapter, 101: opening, 102: hook-shaped portion (latch lever), D1: direction.

## Claims

1. An optical connector attached to an optical fiber cable containing an optical fiber, and inserted into an adapter along a first direction, comprising:
a ferrule that is disposed at a first end of the optical connector in the first direction, and that holds a distal end portion of the optical fiber;
a boot disposed at a second end of the optical connector in the first direction, and including a hole through which the optical fiber cable is inserted, and a grip portion that can be gripped by an operator;
a boot support portion disposed between the ferrule and the boot, including a fitting portion that rotatably fits onto an end portion of the boot that is close to the ferrule in the first direction, and supporting the boot; and
an ejector that is disposed between the ferrule and the boot, and that moves relative to the ferrule in a direction away from the adapter to release an engagement between the optical connector and the adapter,
wherein the ejector further includes one or a plurality of first engaging portions, and
the boot further includes one or a plurality of passage portions that are provided closer to the ferrule than the grip portion, and that allow the one or the plurality of first engaging portions to pass through the passage portions when the boot moves in the first direction to fit onto the fitting portion of the boot support portion, and one or a plurality of second engaging portions that are provided in alignment with the one or the plurality of passage portions in a circumferential direction of the boot, and that engage with the one or the plurality of respective first engaging portions.

2. The optical connector according to claim 1,
wherein the ejector further includes one or a plurality of protruding portions that protrude from an end of the ejector along a direction opposite to the first direction, the end being close to the boot in the first direction, and
the one or the plurality of first engaging portions are provided at distal ends of the one or a plurality of respective protruding portions.

3. The optical connector according to claim 1 or 2,
wherein the ejector has a rectangular tubular shape when viewed from the first direction, and
the plurality of first engaging portions are provided at at least four corners of the ejector.

4. The optical connector according to any one of claims 1 to 3,
wherein the one or the plurality of second engaging portions include respective projections on an outer peripheral surface of the boot, the projections protruding in a direction intersecting the first direction.

5. The optical connector according to claim 4,
wherein recesses into which the one or the plurality of respective second engaging portions fit are formed on rear end surfaces of the projections.

6. The optical connector according to any one of claims 1 to 5,
wherein the plurality of second engaging portions are alternately aligned with the plurality of passage portions in the circumferential direction.

7. The optical connector according to any one of claims 1 to 6,
wherein the plurality of passage portions include respective recesses formed between the plurality of second engaging portions and extending along the first direction.
